(19) Europäisches Patentamt / European Patent Office / Office européen des brevets

(11) **EP 3 080 907 B1**

(12) **EUROPEAN PATENT SPECIFICATION**

(45) Date of publication and mention
of the grant of the patent:
**22.07.2020 Bulletin 2020/30**

(21) Application number: **14827516.7**

(22) Date of filing: **16.12.2014**

(51) Int Cl.:
***H02P 6/17*** *(2016.01)*        ***H02P 25/08*** *(2016.01)*

(86) International application number:
**PCT/GB2014/053710**

(87) International publication number:
**WO 2015/097440 (02.07.2015 Gazette 2015/26)**

(54) **MOTOR COIL TIMING METHOD**

MOTORSPULE ANSTEUERVERFAHREN

MÉTHODE DE DISTRIBUTION MOTEUR COIL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **27.12.2013 GB 201323079
18.07.2014 GB 201412773**

(43) Date of publication of application:
**19.10.2016 Bulletin 2016/42**

(73) Proprietor: **Valeo Air Management UK Limited
Redditch, Worcestershire B98 0DZ (GB)**

(72) Inventors:
• **BOUALLAGA, Kamel
Basildon
Essex SS14 3WN (GB)**
• **DUPUIS, Dominique
Basildon
Essex SS14 3WN (GB)**
• **MANUEL, Goncalo Filipe Simões
Basildon
Essex SS14 3WN (GB)**

(74) Representative: **Garcia, Christine
Valeo Systèmes de Contrôle Moteur
Immeuble Le Delta
14, avenue des Béguines
BP 68532 Cedex
95892 Cergy Pontoise (FR)**

(56) References cited:
**EP-A1- 0 813 289      GB-A- 2 264 407
US-A- 5 739 663**

EP 3 080 907 B1

**Description**

Field of the invention

The present invention relates to switched reluctance motors and in particular to a method of timing the operation of the coils of the motor.

Background

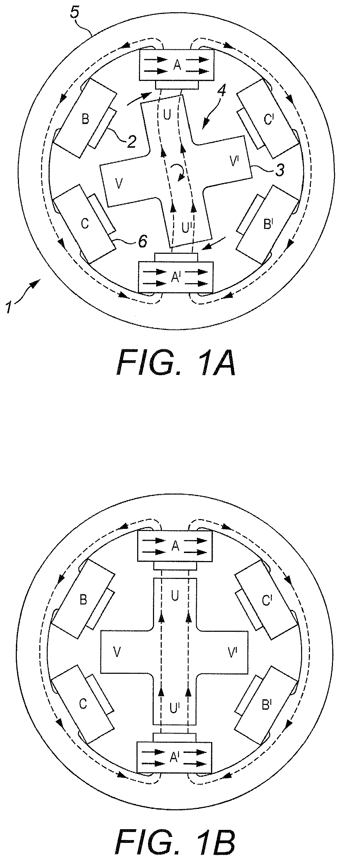

A typical switched reluctance motor is shown in Figures 1A, 1B and 2 to 4. This example has a combination (which is frequent) of six, preferably evenly, spaced poles 2on the stator1 and four, preferably evenly, spaced poles 3 on the rotor 4. In this example, the poles of the stator project inwardly from a stator ring 5, the ring providing a path of low reluctance material between the stator poles.

The rotor is formed of a stack of cross-shaped laminations, also of low reluctance material. Therefore each rotor pole is connected to the diametrically opposite rotor pole by a low reluctance path, for reasons which will become apparent. So, as marked, pole U is connected by a low reluctance path to pole U' and pole V to pole V'.

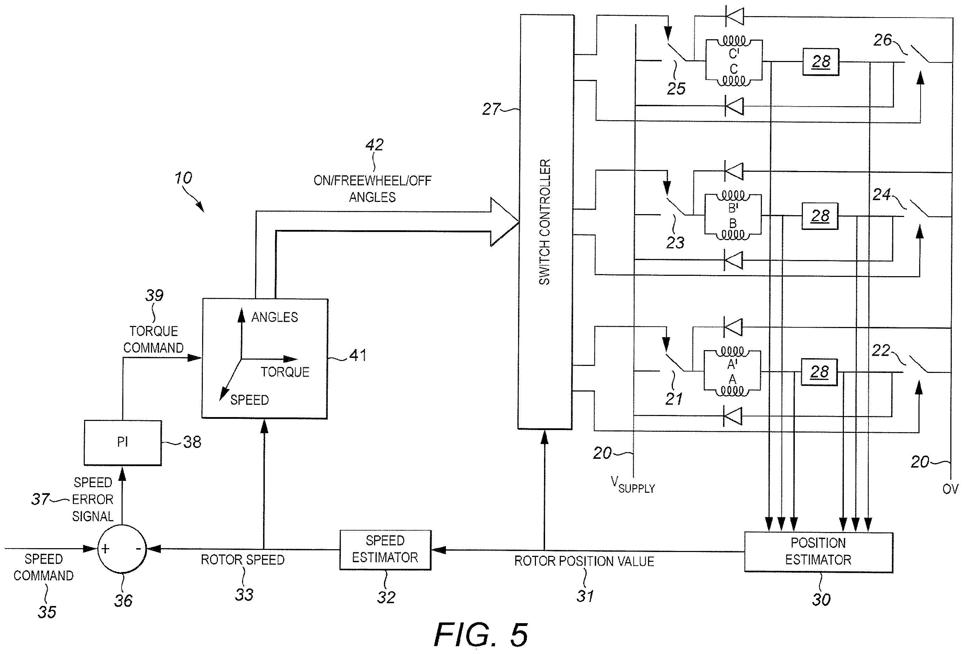

Each pole of the stator is wound with a coil 6 and the coils are arranged in pairs, each pair comprising the coils at opposite ends of a respective diameter through the rotational axis of the motor. In this case therefore the pairs are coils AA', BB' and CC', as marked. The coils of a pair are energised at the same time, with current from a motor control circuit 10(Figure 5), and in a sense such that one provides a magnetic field towards the rotational axis and one away from the axis. In the Figures the arrows on the coils represent the direction of the current in the coil above the plane of the paper and the dashed arrows represent the magnetic flux. Together the magnetic flux lines produced by the energised coils and their respective poles are arranged generally along the diameter between them and then follow the stator ring (in both circumferential directions) to the other energised coil of the pair.

The rotor modifies the distribution of magnetic field lines in the space between the energised pair of stator poles. Positions of the rotor in which a pair of diametrically opposite poles of the rotor are aligned along the diameter between the energised pair of stator poles are positions of the rotor that have minimum reluctance for the magnetic circuit that comprises the rotor between the aligned rotor poles, the energised stator poles and the stator ring. The example of rotor poles U and U' being aligned between stator poles A and A' is shown in Figure 1B. Such a position is therefore a position of minimum magnetic energy. In a non-aligned position, e.g. as in Figure 1A the magnetic flux still flows along the low reluctance path between the poles of rotor and so the flux is diverted from the diameter between the energised poles of the stator, with the result that it has to cross larger air gaps between the poles of the rotor and stator, increasing the reluctance of the magnetic circuit and the magnetic energy. So if the rotor is not aligned there is a torque on it drawing it towards the aligned position.

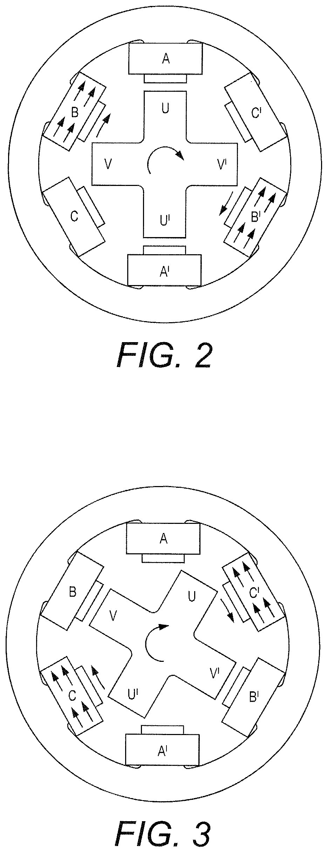

At operational rotation speeds the motor is driven by energising pairs of stator coils in turn to draw the poles of the rotor forward in the direction of rotation. So when, for example, the rotor is in the position of Figure 1A and the rotor is rotating clockwise, so that rotor poles U and U' are approaching stator poles A and A', the coils of A and A' are energised so that U and U' are drawn towards A and A'. When the position of Figure 1B is reached in which U and U' are aligned with coils A and A', A and A' are turned off (Figure 2) so that the rotor can continue to rotate without being slowed or drawn back to A and A'. At this point also rotor poles V and V' are approaching stator poles of coils B and B' so B and B' are energised (Figure 2) to draw stator poles V and V' onwards in the clockwise direction towards B and B'.

When the position of Figure 3 is reached in which V and V' are aligned with coils B and B', B and B' are turned off so that the rotor can continue to rotate without being slowed or drawn back to B and B'. At this point rotor poles U' and U are approaching the stator poles of coils C and C' so coils C and C' are energised to draw rotor poles U' and U onwards in the clockwise direction towards C and C'.

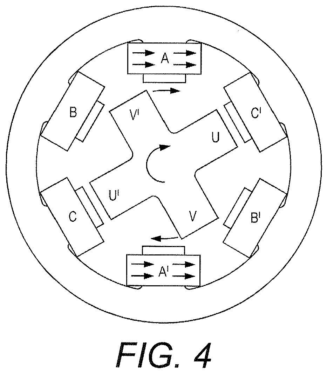

When the position of Figure 4 is reached in which U' and U are aligned with C and C' the coils C and C' are turned off so that the rotor can continue to rotate without being slowed or drawn back to C and C'. At this point rotor poles V' and V are approaching the stator poles of A and A' so the coils A and A' are energised to draw stator poles V' and V onwards in the clockwise direction towards A and A'.

When V' and V reach A and A' the rotor has turned 90°, so, since the rotor has four fold rotational symmetry is in effect in the same position as Figure 2 and so the cycle of energising coils B and B' then C and C' and then A and A' is repeated to advance the rotor the next 90°, and so on.

As is known in the art the coils are switched off and on at particular angles of rotation of the rotor, for example in response to sensing signals generated by the coils as they are both driven by the currents and their inductance changes as the rotor poles pass by them. A first known motor control circuit 10is shown in Figure 5. This comprises the stator coil pairs connected in parallel across a DC power supply20. Coils A and A', connected in parallel with each other, are energised by closing switches 21 and 22, and similarly coils B and B' by switches 23 and 24, and coils C and C' by switches 25 and 26. These switches are operated by the control circuit 10, which closes the switches when the coils are to be energised. Having the coils A and A' operated by a common pair of switches 21 and 22 (similarly each coil pair B and B', and C and C', having its own pair of common switches) is sufficient to provide the patterns of coil energisation described above. The switches 21 to 26 are provided, for example, as FET or IGBT transistors. A measure of the current is used by the motor control circuit 10 to determine the position of the rotor and in turn to determine the timings of the operation of the switches 21 to 26. In particular, as is known in the art, the coils are switched off and on at particular angles of rotation.

In more detail, the control circuit 10 of Figure 5 senses signals generated by the coils as they are both driven by their currents and their inductance changes as the rotor poles pass by them. This inductance comprises the stator coil pairs connected in parallel across a DC power supply 20. The voltage of this supply depends on the application and might be 12V, 24V, 48V or 300V, for example. Coils A and A', connected in parallel with each other, are energised by closing switches 21 and 22, and similarly coils B and B' by switches 23 and 24, and coils C and C' by switches 25 and 26. These switches are operated by a switch control unit 27, which closes the switches when the coils are to be energised. The current in each coil pair is sensed by a resistor 28 connected in series with it to provide a resulting voltage signal that is proportional to the current, which is used to determine the rotor positions, which are used in turn to determine the timings of the operation of the switches 21 and 22, 23 and 24, and 25 and 26.

The motor control circuit 10 processes the signals from the coils in a number of stages, forming a control loop. A position estimator 30 receives the signals indicative of the coil currents and continuously calculates from them the position of the rotor and outputs a rotor position value signal 31. The calculation is performed by a microcontroller and requires a complex algorithm. A speed estimator 32 differentiates this signal with respect to time, to provide a rotor speed signal 33. The control loop is designed to control the speed of the motor to be as set by an input signal, speed command signal 35, and the difference between the speed command signal and the rotor speed signal is formed by a subtractor 36 to form a speed error signal 37. A loop controller 38, for example in this case a proportional-integral controller, uses this signal to adjust a torque command 39 for the motor. The relationship between the torque applied by a motor to its steady state speed is generally monotonically increasing. So the controller 38 increases the torque commanded if the speed error indicates that the motor is running slower than required and reduces torque commanded if the motor is running faster than commanded. The controller 38 also filters the signals circulating round the control loop in order to smooth the response of the loop.

The motor 1 is of course not controlled directly by a torque command and the torque command 39 is converted to control angles 42 for the switches of the motor. These angles are the angles of the rotor at which the switches of the motor operated, in particular the angles at which a coil pair is turned on, the angle at which it is allowed to "freewheel", and the angle at which it is turned off.

To turn the pair of coils on both its associated switches are turned on (for coils AA' switches 21 and 22). In the freewheel mode the switch (e.g. 21) connecting the coils to the positive supply is opened but the current continues to circulate through a diode and at the off angle both switches are opened and the current in the coil passes through the other marked diode marked to ground, dissipating over a short period after the switches are opened. (Alternatively, for the freewheel mode the switch connecting the coils to the negative supply may be opened instead, with the current continuing to flow through the coils of the pair and the other marked diode. Which of the two switches is open in the freewheel mode can be alternated in order share balance the power dissipated by the switches between them.)

The conversion of the torque command signal to these angles is performed by a lookup table 41. The angles needed to provide the torque desired are dependent on the speed of the rotor, so the rotor speed signal 33 is also provided to the lookup table 41, to provide the angles for that torque and speed. These angles are determined empirically while driving the motor while connected to its desired load.

The angles 42 produced by the lookup table are passed to the switch control unit 27, which operates the switches at the angles 42 accordingly when those angles match the rotor position value signal 31. In more detail, the angles 42 supplied are the same for each coil pair and are relative to the angular position of the coil pair. The switch controller 27 keeps track of which coil pair is to be operated next and uses the rotor position value 31 modulo 30° for the comparison with the angles 42.

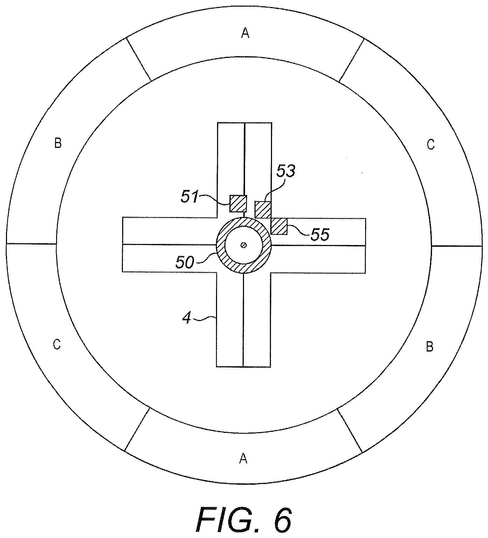

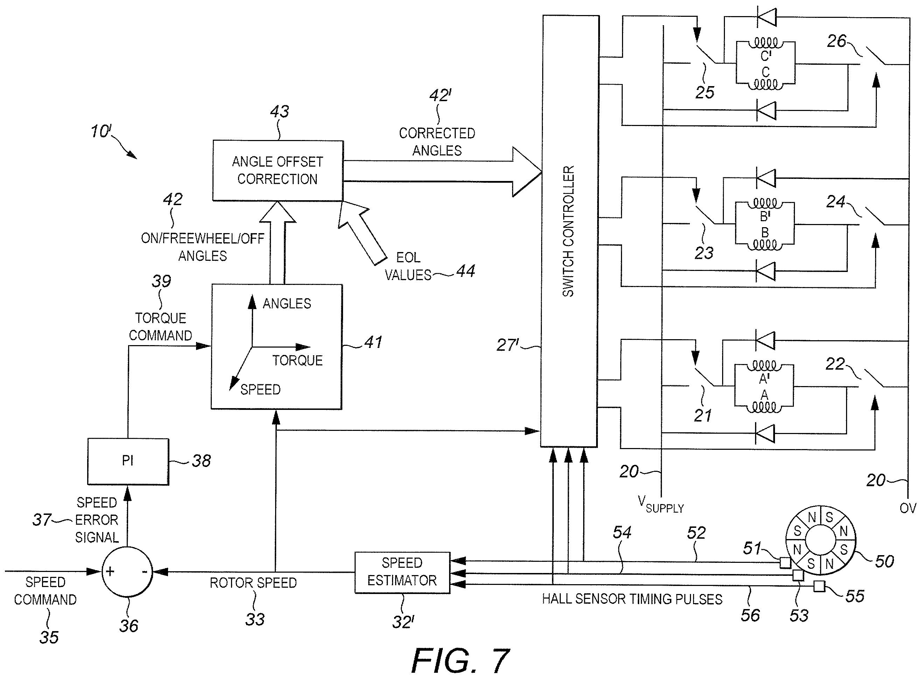

Circuit blocks 30, 32, 36, 38, 41 and 27 are preferably implemented by the microcontroller. A second known control circuit is illustrated by Figures 6 and 7.

Figure 6 shows the motor with a magnetic sensor ring 50 mounted on the rotor shaft 51 of the motor 1 to rotate with the shaft and hence with the rotor. The sensor ring is located along the shaft at some distance from the rotor to avoid magnetic interference from the motor itself. (That distance is not apparent in the Figure since the view is along the axis of the shaft.) The ring is magnetised radially in eight sectors, with each being magnetised in the opposite direction. Three Hall Effect sensors 51, 53, 55 are mounted a short distance outside the ring 50 and to be stationary with respect to the stator. The sensors are distributed along a section of the circumference of the ring, spaced from each other in steps of 30° in the circumferential direction. This combination means that each N to S boundary of the ring (which are distinct to the sensors from the S to N boundaries) passes the three sensors in turn, one every 30° of rotation of the rotor and ring, and then after 90°, the next N-S boundary passes them in the same order again spaced by 30°, and so on. Each time an N-S boundary passes a sensor 51, 53, 55 its associated signal conditioning electronics produces, on a respective conductor, a respective pulse signal 52, 54, 56 at that time (Figure 7). The pulses from the three Hall Effect sensors occur therefore with the same frequency and angular separation between them as the features of the current signals passing through the coils in the control circuit of Figure 5.

These signals 52, 54, 56 are used as follows. The speed estimator 32' uses the time between the pulses to estimate the angular speed of the rotor to provide the rotor speed signal 33. (The resource intensive position estimator is not required.) The switch controller 27' uses the pulses 52, 54, 56 on the respective conductors to time the switches for respective pairs of coils AA', BB', CC'. It calculates an offset in time for the operation of the switches from the angles 42' supplied by the control loop and rotor speed signal. These angles 42' are first adjusted by an angle offset corrector 43 from those 42 provided by the lookup table 41 to allow for the angular position of the N-S boundaries of the magnetic ring 50 with respect to the rotor. The offset adjustment needed (EOL (end-of-line) values 44) is measured at the end of manufacture of the motor complete with its magnetic indicator ring 50 in place on the rotor shaft, and is programmed into the motor control circuit 10'. The offset is the difference between the angle at which a rotor pole passes a stator pole of a coil (A or B or C) and the angle at which the N-S boundary respective to that rotor pole passes the sensor 51, 53, 55 respective to that coil. This adjustment was not needed in the circuit of Figure 5 because the current signals produced by the coils are automatically aligned to the rotor poles passing the stator poles. Otherwise the rest of the circuit of Figure 7 operates in the same way as the circuit of Figure 5.

As is also known in the art, other combinations of stator and rotor pole numbers are possible for the motor. These have different cycles of energisation of the coils in order to keep the torque on the rotor in the forward direction. A common relationship between the numbers of poles is to have two more stator poles than rotor poles and to have both even in number. The choice of the number of poles usually takes into account the operating speed of the motor, the operating power, the acceptable level of torque ripple (variation in torque supplied by the motor with angle of the rotor), and the circuitry required.

Note finally that it is usually generally preferred in such motors for reasons of balance of torque to energise coils in pairs that are diametrically opposite to each other.

The UK Patent Application GB 2 264 407 A discloses a control circuit for a switched reluctance motor, comprising:controllable switches for connection to stator coils of the motor to control whether the coils are energised,a single position sensor responsive to the position of the rotor to provide indications of the timings of one or more positions of the rotor per revolution of the rotor,a position interpolator connected to receive the indications of timings of the rotor positions from the single position sensor, and to provide one or more indications of the timings of one or more estimated positions of the rotor between the timings indicated by the position sensor,a switch controller connected to receive the indications of the timings from the position interpolator to determine timings of switch control signals connected to operate the switches.

## Summary

According to the present invention there is provided a control circuit for a switched reluctance motor, comprising:

controllable switches for connection to stator coils of the motor to control whether the coils are energised,
a single position sensor responsive to the position of the rotor to provide indications of the timings of one or more positions of the rotor per revolution of the rotor,
a position interpolator connected to receive the indications of timings of the rotor positions from the single position sensor, and to provide one or more indications of the timings of one or more estimated positions of the rotor between the timings indicated by the position sensor,
a switch controller connected to receive the indications of the timings from the position interpolator and the indications of the timings from the position sensor to determine timings of switch control signals connected to operate the switches.

By interpolating to provide timings of estimated positions, the present invention negates the need for multiple position sensors.

The present invention recognises that by using an interpolator to provide the indication of the timings of the estimated positions of the rotor (between the timings indicated by the single position sensor), only one sensor need be provided. This simplifies the control system and may enable its cost to be reduced. In effect, the timing of the estimated positions from the interpolator can be used instead of requiring dedicated sensors to sense those timings (as is the case in the prior art example in Figure 6.)

The position interpolator may be connected to estimate the one or more positions of the rotor based on the assumption that the rotor speed is currently constant.

The position interpolator may be connected to estimate the one or more positions of the rotor based on the assumption that the rotor speed is currently constant, that speed being a measured speed of the rotor. The position interpolator may be connected to receive the measured speed based on the indications of the timings of the rotor position from the position sensor.

The position interpolator may be connected to estimate the one or more positions of the rotor taking into account the acceleration of the rotor. This tends to lead to faster transient response, and higher efficiency during transient operations.

The position interpolator may be connected to estimate the acceleration of the motor from measurements of the speed of the rotor, to estimate the future speed of the rotor from the estimate of the acceleration and to estimate the time rotor will reach a particular position using that future speed.

The position interpolator may be arranged to take into account the acceleration of the rotor by applying a correction factor. The timings of the one or more estimated positions of the rotor may be based on an initial estimation, which is then adjusted (for example multiplied) by the correction factor. The correction factor may be read from a look-up table. The control circuit may comprise a memory module in which the look-up table is stored. The values of the correction factor in the look-up table may have been empirically obtained. The look-up table may be responsive to a torque command and/or a rotor speed value to provide the correction factor. The look-up table may be responsive to other variables, such as the temperature of the motor and/or a battery voltage drop, to provide the correction factor.

Having a look-up table of correction factors is thought to be especially beneficial because the core implementation of the control circuit can remain the same for various different applications/rotors; only the values in the correction table need be adjusted (those values being specific to particular applications, rotor inertia, load and/or product performances). This enables the arrangement to be relatively flexible in terms of the scenarios it can be used in. The control circuit may comprise a control loop connected to provide the switch controller with rotor angles, dependent on a required motor torque, at which to operate the switches, the switch controller being connected to base the determination of the timings of the switch control signals also on those angles.

The control loop may comprise:

a speed estimator connected to receive the indications of the timings of one or more positions of the rotor and to provide therefrom a rotor speed value,
a subtractor connected to receive the rotor speed value and form the difference between that and a speed command value to from a speed error value,
a loop controller connected to responsive to the speed error value to increase a torque command if the rotor speed value is less than the speed command value and to decrease the torque command if the rotor speed value is more than the speed command value,
a lookup table responsive to the torque command and the rotor speed value to provide the rotor angles.

The control loop may comprise an offset corrector connected to adjust the rotor angles from the lookup table with values allowing for an offset of the position sensor.

The present disclosure also provides an apparatus comprising:

a switched reluctance motor, comprising a rotor and comprising stator coils,
a control circuit according to the invention connected to the stator coils of the motor,
a supercharger having a compressor wheel coupled to the rotor of the motor to be driven thereby.

The present invention further provides a method of controlling a switched reluctance motor, comprising:

sensing the position of the rotor of the motor, using a single sensor, to provide indications of the timings of one or more positions of the rotor per revolution of the rotor,
deriving from the indications of timings of the rotor positions indications of the timings of one or more estimated positions of the rotor between the timings indicated by the sensing, and
energising stator coils of the motor at times determined in response to the indications of the timings of the estimated positions and the indications of the timings the rotor positions.

The deriving may comprise estimating the one or more positions of the rotor based on the assumption that the rotor speed is currently constant. The estimating may be based on a measured speed of the rotor. The measured speed may be based on the indications of the timings of the rotor positions.

The deriving may comprise estimating the one or more positions of the rotor taking into account the acceleration of the rotor. The estimating may comprise: estimating the acceleration of the motor from measurements of the speed of the rotor, estimating the future speed of the rotor from the estimate of the acceleration and estimating the time rotor will reach a particular position using that future speed. The estimating may comprise: making an initial estimate of the timings of the one or more estimated positions of the rotor; and adjusting the initial estimate by applying a correction factor to thereby obtain the timings of one or more estimated positions of the rotor. The correction factor may be read from a look-up table. The correction factor may be such that initial estimate is corrected to take into account the acceleration of the rotor.

The present disclosure also provides driving a compressor wheel of a supercharger with the switched reluctance motor.

Brief Description of the Drawings

Examples of the invention will now be described with reference to the accompanying drawings, of which:

FIGURES 1-4 show consecutive stages of rotation of the rotor, or phases, in the operation of a known switched reluctance at operational speeds,

FIGURE 5 is a block circuit diagram of a first known control circuit for the motor of Figure 1 etc.,

FIGURE 6 shows a magnetic position indicator ring mounted on the motor of Figure 1 etc. as used in both a second known control circuit for the motor of Figure 1 etc. and in an example of a motor control circuit in accordance with the invention,

FIGURE 7 is a block circuit diagram of a second known control circuit for the motor of Figure 1 etc.,

FIGURE 8 is a block circuit diagram of an example of a control circuit for a motor of Figure 1 etc. in accordance with the invention,

FIGURE 9 is a block circuit diagram showing more detail of a portion of the circuit of Figure 8,

FIGURE 10 is a look-up table from a further embodiment of the invention.

Examples

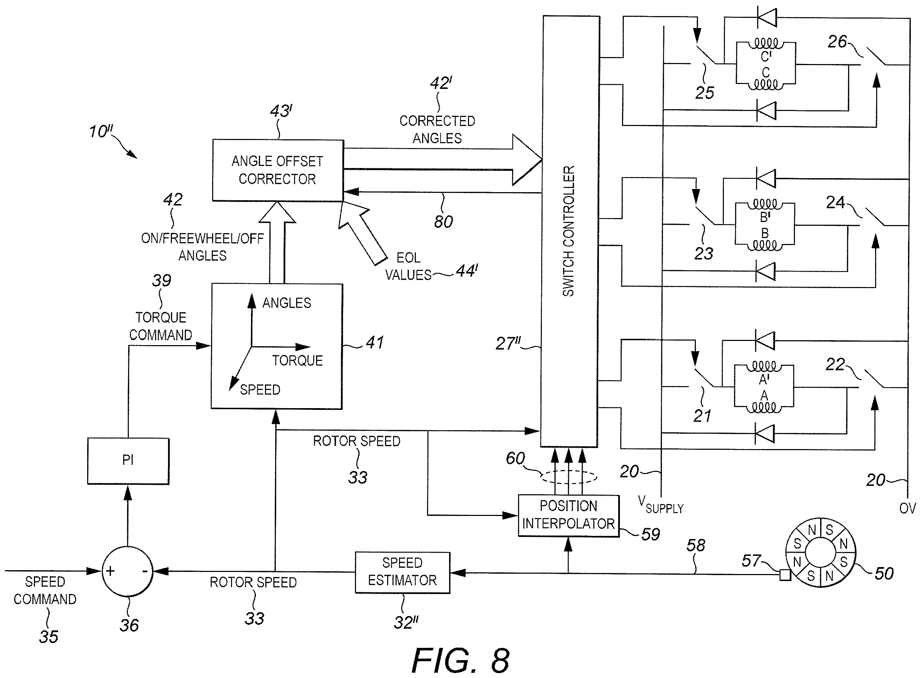

Figure 8 is a block diagram of an example motor control circuit 10'' in accordance with the present invention. It has elements similar to that of the prior art circuit of Figure 7, but there are significant differences. The magnetic indicator ring 50 (Figure 6) again has eight alternately magnetised sectors, but this is sensed by only one Hall Effect sensor 57. Again this provides a pulse signal 58 every time a N-S boundary of the indicator ring passes the sensor 57, which is therefore once every 90° of the rotation of the rotor, which is once per pole of the rotor.

The speed estimator 32'' has a different form. In this example, it calculates the rotor speed signal from the time between the pulses 58 from the single Hall Effect sensor 57.

In this example the next items on the control loop: the subtractor 36, the loop controller 38 and the lookup table 41 are as in the examples of Figures 5 and 7 and provide accordingly the switching angles for the stator coils required. Again as in the circuit of Figure 7 the angles 42 are adjusted by the angle offset corrector 43 using the EOL values 44.

The switch controller 27'' is also arranged differently. Again it receives the offset adjusted switch angles 42'' from the angle offset corrector 43' but in this example it cooperates with a position interpolator 59 set out below. (Because there is now only one Hall Effect sensor 57 the EOL offset values 44' applied by the angle offset corrector 43' are only the angles between each N-S boundary of the magnetic ring 50 passing the sensor 57 and a respective rotor pole passing a particular coil e.g. coil A).

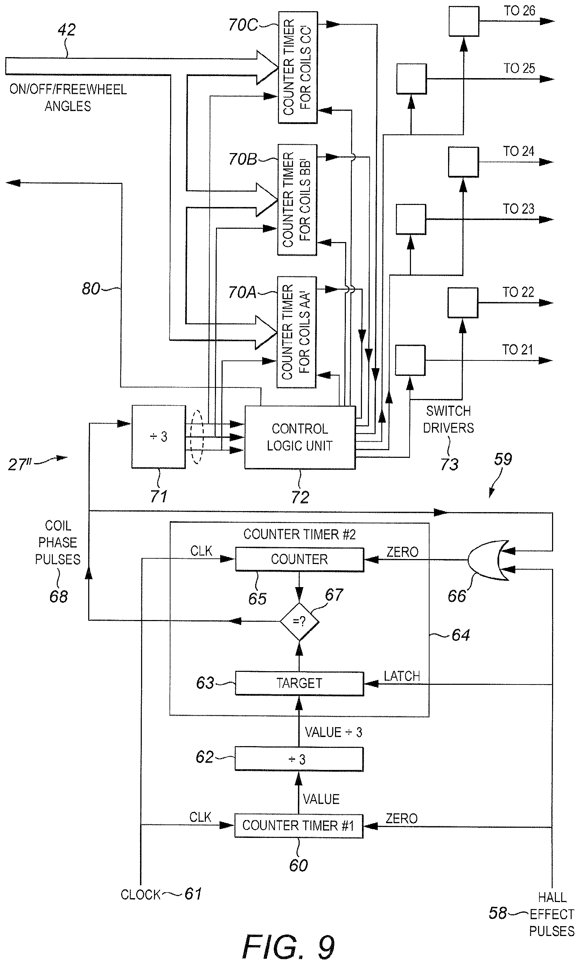

A more detailed block diagram of the switch controller 27'' and the position interpolator 59 is shown in Figure 9. The position interpolator 59 has a first counter timer 61, counting a clock signal 61, that is also responsive to the pulses 58 from the Hall Effect sensor 57. At each pulse of the Hall Effect sensor the count achieved by the counter timer 61 is zeroed but its value is also latched, having been divided by three by divider 62 into a target register 63 of a second counter timer 64, the counter 65 of which is also zeroed by the pulse 58 from the Hall Effect sensor 57, via OR gate 66. A comparator 67 of the second counter timer 64 provides periodic output pulses 68 whenever the counter 65 equals the target register 63. So the intervals defined by the value in target register 63 are therefore one third of the time taken for the last 90° of rotation of the rotor. The pulses 68 from the second counter time 65 therefore mark the expected beginnings of three subsequent coil phases of the motor if the assumption is that the speed of the motor is constant.

A three state counter 71 counts the pulses 68 to keep track of which coil pair, AA', BB' or CC' is to be energised. It provides three outputs, respective to the coil pairs, each having a pulse having the timing of one of the pulses 68 when the respective coil is to be energised.

These pulses 60 are used by the switch control unit 27" to time the operation of the switches 21 to 26 with each pulse timing consecutively coil pairs AA', BB', CC',AA', BB', CC' and so on.

The assumption of constant rotor speed is a reasonable assumption in many operating conditions where it takes many revolutions of the motor for it to accelerate significantly, since the estimate of the rotor position is revised each time the Hall Effect sensor 57pulses, which is several (i.e. in this case four) times per revolution.

Under positive acceleration of the rotor, the position interpolator 59 operates as follows. The third pulse from the second counter timer 64 after the pulse 58 from the Hall Effect sensor would occur after the next pulse from the Hall Effect sensor, however it is suppressed by the reloading of target register 63 and zeroing of the counter65 caused by that next Hall effect pulse.

Under deceleration the third pulse from the second counter timer 64 is issued, but it will be a little ahead of the next pulse from the Hall Effect sensor. However, while the counter 65 begins to count again it is soon zeroed by the next Hall Effect sensor pulse and so the next three pulses 68 are timed relative to that. Note that the position interpolator 59 does not issue a pulse at automatically at the same time as the pulse from the Hall Effect sensor but only at periods after it. An output pulse will occur at the same time as the Hall Effect pulse if the speed of the motor is constant.

The circuit of Figure 9 is preferably provided by the microcontroller and is implemented by using its on board timers for the timer counters 61 and 64, which issue software interrupts when the counts are reached.

The switch control unit 27'' uses the pulses 60 from the position interpolator as follows. The outputs 60 of three state counter 71 are respectively connected to a control logic unit 72, which immediately causes a respective timer counter 70A, 70B or 70C and to select latch into its target register the relevant offset adjusted on angle from among the angles 42". The relevant angle is selected by the control logic unit providing a selection signal 80 to the angle offset corrector 43', which depends on which particular N-S boundary of the indicator ring was sensed (of which the control logic unit keeps track. (Before loading the on angle into the timer counter 72 converts the angle into a time by dividing the angle by the current speed of the rotor as indicated by the rotor speed signal to provide a time at which the rotor is expected to be at that angle. For simplicity, references below are made to loading the timer counters 70 with on, freewheel and off angles, but on each occasion they are first converted to a time by the control logic unit 72.) In reply when the counter 70 reaches the target, the control logic unit 72 receives a pulse back from the timer 70 and in response it causes the switch drivers 73 to output signals to close the switches for the respective pair of stator coils. At that time it also loads the freewheel angle to the target register of the same counter timer (without zeroing the counter) and again operates the stator coil switches for the relevant coil pair appropriately (by opening one of its switches) when the pulse is received back from the timer. Then it loads the off angle to the counter timer (without zeroing the counter) and then opens both the relevant stator coil switches when the pulse is received back from the timer.

(Alternatively the timer 70 can be utilised by first zeroing it loading the target with the on angle, then when that time is reached zeroing it and reloading the target with the difference between the freewheel angle and the on angle, and then when that time is reached zeroing it reloading the target with the difference between the off angle and the freewheel angle).

Three timers counters 70 are used in this example, and the control logic unit operates the respective coil pair when it receives a pulse from one of them. Alternatively one time can be used (because only one coil pair is operated at a time) and the control logic unit remembers, from the pulses 60, which coil pair it is operating at the current time.

In a second example, which is similar to the first, the position interpolator 59 is as follows. The assumption used by the rotor position interpolator 59 to estimate the rotor position is improved by taking into account the acceleration of the rotor. In this example the times of the most recent pulses 58 from the Hall Effect sensor 57 are recorded and the current acceleration of the rotor is estimated from that. This estimate of the acceleration is then used to estimate the timings of the rotor arriving at the three phases of the motor, which in this case are every 30°.

The acceleration is estimated by the position interpolator 59, preferably implemented by the microcontroller, as follows. At regular time intervals the control logic unit 72 notes the speed of the rotor, from the rotor speed signal 33, and then estimates the acceleration of the rotor as [the current rotor speed minus the previous rotor speed] divided by the time interval between them. So if the rotor speed and acceleration estimates are indexed as n, and so occur at times $t_n$, this calculation can be written as:

$$\text{Acceleration}(n) = \frac{\text{Speed}(n) - \text{Speed}(n-1)}{\delta t}$$

where dt is $t_n$-$t_{n-1}$.

The position then estimates the speed at the next time $t_{n+1}$ as:

$$\text{Speed(n+1) = dt x Acceleration(n)+ Speed(n)}$$

7

where dt = $t_{n+1}$-$t_n$
(an exemplary value for dt is a constant of 2ms)
i.e. a constant acceleration is assumed.

This speed is then used to divide the on, freewheel and off angles as in the example above.

Thus, knowing the next estimated speed, the time between coil phases AA', BB' and CC' can be estimated as:

$$\frac{1}{\text{Speed(n+1)}} * \frac{1}{\text{rotor poles x stator phases}} \quad .$$

In a further embodiment of the invention, the acceleration is not estimated using the above-mentioned formulae. This further embodiment of the invention is identical to the first embodiment except that the position interpolator 59 is arranged to take into account the acceleration of the rotor, by applying a correction factor 101.

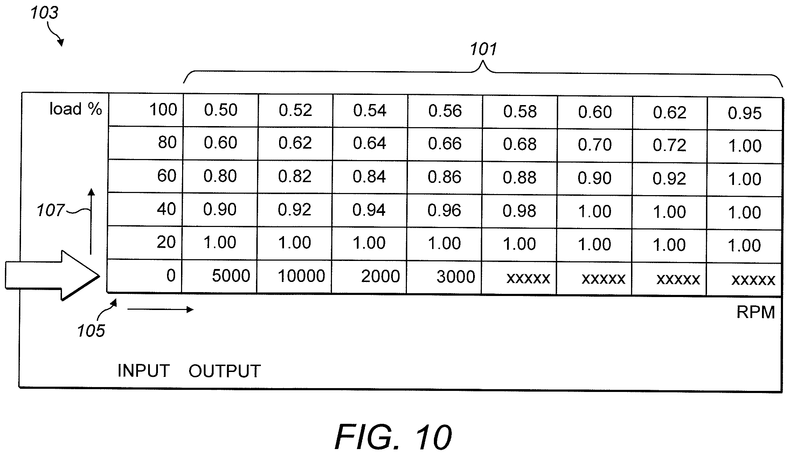

The position interpolator 59 first makes an initial estimate in the same manner as described with reference to the first embodiment. Acceleration of the rotor is taken into account by multiplying this initial estimate by the correction factor 101. The correction factor 101 is obtained from a look-up table103 (shown in Figure 10). To extract the appropriate correction factor 101, the control circuit 10" retrieves the rotor speed value (see description with reference to the first embodiment) and a torque command (dependent on whether the rotor speed value is less than the speed command value). An appropriate correction factor 101 is then read off the look-up table dependent on that speed value (x-axis105 with values of 0 -XXXX)and torque command (y-axis 107 with values of 0 - 100%).

The value of the correction factor 101 is such that the initial estimate is either maintained (correction factor = 1.00) or reduced (correction factor < 1.00). This ensures the timing of the estimated positions of the rotor is adjusted to take into account acceleration of the rotor (which can be significant in, for example, an electric supercharger).

The look-up table 103 is populated with values of correction factor that have been obtain empirically. For example the optimal correction factors 101 for each combination of rotor speed and load, are obtained from experiment/calibration of the motor. In other embodiments the empirical testing may be performed by means of a computer simulation.

Having a look-up table 103 of correction factors 101 is thought to be especially beneficial because the core implementation of the control circuit 10" can remain the same for various different applications/rotors; only the values in the correction table 103 need be adjusted (those values being specific to particular applications/rotor inertia). This enables the arrangement to be relatively flexible in terms of the scenarios it can be used in.

In another embodiment (not shown) the look-up table includes third axis in respect of the temperature of the motor. Thus, the correction factor may also be adjusted, as required, in dependence on the temperature of the motor. Another parameter that may affect the correction factor is the battery voltage supplying the motor (which may vary while the system operates). In another embodiment (not shown) the look-up table includes a third axis in respect of the battery voltage.

In the above-mentioned embodiments, the switched reluctance motor controlled by the invention may be used to drive the compressor wheel of a supercharger.

## Claims

1.  A control circuit for a switched reluctance motor, comprising:

    controllable switches (21, 22, 23, 24, 25, 26) for connection to stator coils of the motor to control whether the coils are energised,
    a single position sensor (57) responsive to the position of the rotor to provide indications of the timings of one or more positions of the rotor per revolution of the rotor,
    a position interpolator (59) connected to receive the indications of timings of the rotor positions from the single position sensor (57), and to provide one or more indications of the timings of one or more estimated positions of the rotor between the timings indicated by the position sensor (57),
    a switch controller (27") connected to receive the indications of the timings from the position interpolator (59) and the indications of the timings from the position sensor (57) to determine timings of switch control signals connected to operate the switches (21, 22, 23, 24, 25, 26).

2.  A control circuit as claimed in claim 1 wherein the position interpolator (59) is connected to estimate the one or more positions of the rotor based on the assumption that the rotor speed is currently constant.

3. A control circuit as claimed in claim 2 wherein the position interpolator (59) is connected to estimate the one or more positions of the rotor based on the assumption that the rotor speed is currently constant, that speed being a measured speed of the rotor.

4. A control circuit as claimed in any preceding claim comprising a control loop connected to provide the switch controller (27'') with rotor angles (42'), dependent on a required motor torque, at which to operate the switches (21, 22, 23, 24, 25, 26), the switch controller (27'') being connected to base the determination of the timings of the switch control signals also on those angles.

5. A control circuit as claimed in claim 4 wherein the control loop comprises

   a speed estimator (32'') connected to receive the indications of the timings of one or more positions of the rotor and to provide therefrom a rotor speed value,
   a subtractor (36) connected to receive the rotor speed value and form the difference between that and a speed command value to from a speed error value,
   a loop controller (38) connected to responsive to the speed error value to increase a torque command if the rotor speed value is less than the speed command value and to decrease the torque command if the rotor speed value is more than the speed command value,
   a lookup table (41) responsive to the torque command and the rotor speed value to provide the rotor angles.

6. A control circuit as claimed in claim 5 wherein control loop comprises an offset corrector (43) connected to adjust the rotor angles from the lookup table (41) with values allowing for an offset of the position sensor (57).

7. Apparatus comprising:

   a switched reluctance motor, comprising a rotor and comprising stator coils,
   a control circuit as claimed in any one of claims 1 to 6 connected as claimed to the stator coils of the motor,
   a supercharger having a compressor wheel coupled to the rotor of the motor to be driven thereby.

8. A method of controlling a switched reluctance motor, comprising:

   sensing the position of the rotor of the motor, using a single sensor (57), to provide indications of the timings of one or more positions of the rotor per revolution of the rotor,
   deriving from the indications of timings of the rotor positions indications of the timings of one or more estimated positions of the rotor between the timings indicated by the sensing, and
   energising stator coils of the motor at times determined in response to the indications of the timings of the estimated positions and the indications of the timings the rotor positions.

9. A method as claimed in claim 8 wherein the deriving comprises estimating the one or more positions of the rotor based on the assumption that the rotor speed is currently constant.

10. A method as claimed in claim 8 wherein the estimating is based on a measured speed of the rotor.

11. A method as claimed in claim 10 wherein the measured speed is based on the indications of the timings of the rotor positions.

12. A method as claimed in claim 8 wherein the deriving comprises estimating the one or more positions of the rotor taking into account the acceleration of the rotor.

13. A method as claimed in claim 12 wherein the estimating comprises: estimating the acceleration of the motor from measurements of the speed of the rotor, estimating the future speed of the rotor from the estimate of the acceleration and estimating the time rotor will reach a particular position using that future speed.

14. A method as claimed in claim 12 wherein the estimating comprises:

   (i) making an initial estimate of the timings of the one or more estimated positions of the rotor; and
   (ii) adjusting the initial estimate by applying a correction factor to thereby obtain the timings of one or more estimated positions of the rotor.

**15.** A method as claimed in any one of claims 8 to 14 wherein the switched reluctance motor is driving a compressor wheel of a supercharger.

**Patentansprüche**

**1.** Steuerungsschaltung für einen geschalteten Reluktanzmotor, Folgendes umfassend:

steuerbare Schalter (21, 22, 23, 24, 25, 26) zur Verbindung mit Statorspulen des Motors, um zu steuern, ob die Spulen erregt werden,
einen einzelnen Positionsgeber (57), der auf die Position des Rotors reagiert, um Angaben der Taktungen einer oder mehrerer Positionen des Rotors pro Umdrehung des Rotors bereitzustellen,
einen Positionsinterpolator (59), der angeschlossen ist, um die Angaben der Taktungen der Rotorpositionen aus dem einzelnen Positionsgeber (57) zu empfangen, und eine oder mehrere Angaben der Taktungen einer oder mehrerer geschätzter Positionen des Rotors zwischen den Taktungen bereitzustellen, die durch den Positionsgeber (57) angegeben werden,
eine Schaltersteuerung (27"), die angeschlossen ist, um die Angaben der Taktungen aus dem Positionsinterpolator (59) und die Angaben der Taktungen aus dem Positionsgeber (57) zu empfangen, um Taktungen von Schaltsteuerungssignalen zu bestimmen, die angeschlossen sind, um die Schalter (21, 22, 23, 24, 25, 26) zu betreiben.

**2.** Steuerungsschaltung nach Anspruch 1, wobei der Positionsinterpolator (59) angeschlossen ist, um die eine oder die mehreren Positionen des Rotors auf der Grundlage der Annahme abzuschätzen, dass die Rotorgeschwindigkeit gegenwärtig konstant ist.

**3.** Steuerungsschaltung nach Anspruch 2, wobei der Positionsinterpolator (59) angeschlossen ist, um die eine oder die mehreren Positionen des Rotors auf der Grundlage der Annahme abzuschätzen, dass die Rotorgeschwindigkeit gegenwärtig konstant ist, wobei diese Geschwindigkeit eine gemessene Geschwindigkeit des Rotors ist.

**4.** Steuerungsschaltung nach einem der vorhergehenden Ansprüche, umfassend einen Regelkreis, der angeschlossen ist, um der Schaltersteuerung (27") Rotorwinkel (42') in Abhängigkeit von einem erforderlichen Motordrehmoment bereitzustellen, bei dem die Schalter (21, 22, 23, 24, 25, 26) betrieben werden sollen, wobei die Schaltersteuerung (27") angeschlossen ist, um die Bestimmung der Taktungen der Schaltsteuerungssignale auch auf diesen Winkeln zu basieren.

**5.** Steuerungsschaltung nach Anspruch 4, wobei der Regelkreis Folgendes umfasst
einen Geschwindigkeitsabschätzer (32"), der angeschlossen ist, um die Angaben der Taktungen einer oder mehrerer Positionen des Rotors zu empfangen und daraus einen Rotorgeschwindigkeitswert bereitzustellen,
einen Subtrahierer (36), der angeschlossen ist, um den Rotorgeschwindigkeitswert zu empfangen und die Differenz zwischen diesem und einem Geschwindigkeitsbefehlswert zu bilden, um einen Geschwindigkeitsfehlerwert zu bilden,
eine Schleifensteuerung (38), die angeschlossen ist, um auf den Geschwindigkeitsfehlerwert zu reagieren, um einen Drehmomentbefehl zu erhöhen, wenn der Rotorgeschwindigkeitswert kleiner ist als der Geschwindigkeitsbefehlswert, und den Drehmomentbefehl zu vermindern, wenn der Rotorgeschwindigkeitswert größer ist als der Geschwindigkeitsbefehlswert,
eine Verweistabelle (41), die auf den Drehmomentbefehl und den Rotorgeschwindigkeitswert reagiert, um die Rotorwinkel bereitzustellen.

**6.** Steuerungsschaltung nach Anspruch 5, wobei eine Regelschleife einen Versatzkorrektor (43) umfasst, der angeschlossen ist, um die Rotorwinkel aus der Verweistabelle (41) mit Werten anzupassen, die einen Versatz des Positionsgebers (57) ermöglichen.

**7.** Vorrichtung, Folgendes umfassend:

einen geschalteten Reluktanzmotor, einen Rotor umfassend und Statorspulen umfassend,
eine Steuerungsschaltung nach einem der Ansprüche 1 bis 6, die, wie beansprucht, an die Statorspulen des Motors angeschlossen ist,
einen Kompressor mit einem Verdichterrad, das mit dem Rotor des Motors gekoppelt ist und das dadurch angetrieben werden soll.

**8.** Verfahren zum Steuern eines geschalteten Reluktanzmotors, Folgendes umfassend:

Abtasten der Position des Rotors des Motors unter Verwendung eines einzelnen Sensors (57), um Angaben der Taktungen einer oder mehrerer Positionen des Rotors pro Umdrehung des Rotors bereitzustellen, Ableiten aus den Angaben der Taktungen der Rotorpositionen von Angaben der Taktungen einer oder mehrerer geschätzter Positionen des Rotors zwischen den Taktungen, die durch das Abtasten angegeben wurden, und Erregen von Statorspulen des Motors zu Zeitpunkten, die als Reaktion auf die Angaben der Taktungen der geschätzten Positionen und der Angaben der Taktungen der Rotorpositionen bestimmt werden.

**9.** Verfahren nach Anspruch 8, wobei das Ableiten ein Abschätzen der einen oder der mehreren Positionen des Rotors auf der Grundlage der Annahme umfasst, dass die Rotorgeschwindigkeit gegenwärtig konstant ist.

**10.** Verfahren nach Anspruch 8, wobei das Abschätzen auf einer gemessenen Geschwindigkeit des Rotors basiert.

**11.** Verfahren nach Anspruch 10, wobei die gemessene Geschwindigkeit auf den Angaben der Taktungen der Rotorpositionen basiert.

**12.** Verfahren nach Anspruch 8, wobei das Ableiten ein Abschätzen der einen oder der mehreren Positionen des Rotors unter Berücksichtigen der Beschleunigung des Rotors umfasst.

**13.** Verfahren nach Anspruch 12, wobei das Abschätzen Folgendes umfasst: Abschätzen der Beschleunigung des Motors aus Messungen der Geschwindigkeit des Rotors, Abschätzen der zukünftigen Geschwindigkeit des Rotors aus der Abschätzung der Beschleunigung und Abschätzen des Zeitpunkts, an dem der Rotor eine bestimmte Position erreichen wird, unter Verwendung dieser zukünftigen Geschwindigkeit.

**14.** Verfahren nach Anspruch 12, wobei das Abschätzen Folgendes umfasst:

(i) Erstellen einer anfänglichen Abschätzung der Taktungen der einen oder der mehreren geschätzten Positionen des Rotors; und
(ii) Anpassen der anfänglichen Abschätzung durch Anwenden eines Korrekturfaktors, um dadurch die Taktungen einer oder mehrerer geschätzter Positionen des Rotors zu ermitteln.

**15.** Verfahren nach einem der Ansprüche 8 bis 14, wobei der geschaltete Reluktanzmotor ein Verdichterrad eines Kompressors antreibt.

**Revendications**

**1.** Un circuit de commande pour un moteur à réluctance commuté,
comprenant:

des commutateurs contrôlables (21, 22, 23, 24, 25, 26) pour connexion aux bobines de stator du moteur pour contrôler si les bobines sont excitées,
un capteur de position unique (57) sensible à la position du rotor pour fournir des indications sur les temps d'une ou plusieurs positions du rotor par tour du rotor,
un interpolateur de position (59) connecté pour recevoir des indications de minutage des positions du rotor à partir du capteur de position (57), et pour fournir une ou plusieurs indications des synchronisations d'une ou plusieurs positions estimées du rotor entre les temporisations indiquées par le capteur de position (57),
un contrôleur de commutateur (27 ") connecté pour recevoir les indications des synchronisations de l'interpolateur de position (59) et les indications des temporisations du capteur de position (57) pour déterminer les synchronisations des signaux de commande de commutateur connectés pour actionner les interrupteurs (21, 22, 23, 24, 25, 26).

**2.** Circuit de commande selon la revendication 1, dans lequel l'interpolateur de position (59) est connecté pour estimer une ou plusieurs positions du rotor sur la base de l'hypothèse que la vitesse du rotor est actuellement constante.

3. Circuit de commande selon la revendication 2, dans lequel l'interpolateur de position (59) est connecté pour estimer l'une ou plusieurs positions du rotor sur la base de l'hypothèse que la vitesse du rotor est actuellement constante, cette vitesse étant la vitesse mesurée du rotor.

4. Circuit de commande selon l'une quelconque des revendications précédentes comprenant une boucle de commande connectée pour fournir l'interrupteur contrôleur (27 ") avec des angles de rotor (42 '), dépendant d'un couple moteur requis pour actionner les interrupteurs (21, 22, 23, 24, 25, 26), le contrôleur de commutateur (27 ") étant connecté pour baser la détermination des temps du contrôleur de commutateur également les signaux de commande sur ces angles.

5. Circuit de commande selon la revendication 4, dans lequel la boucle de contrôle comprend un estimateur de vitesse (32 ") connecté pour recevoir des indications de la synchronisation d'une ou plusieurs positions du rotor et lui fournir une valeur de vitesse de rotor,
un soustracteur (36) connecté pour recevoir la valeur de la vitesse du rotor et former la différence entre cela et une commande la valeur de vitesse à partir d'une valeur d'erreur de vitesse,
un contrôleur de boucle (38) connecté pour répondre à la valeur d'erreur de vitesse pour augmenter une commande de couple si la valeur de vitesse du rotor est inférieure à la valeur de commande de vitesse et à diminuer la commande de couple si la valeur de vitesse du rotor est supérieure à la valeur de la commande de vitesse,
une table de consultation (41) sensible à la commande de couple et la valeur de la vitesse du rotor pour fournir les angles du rotor.

6. Circuit de commande selon la revendication 5, dans lequel la boucle de commande comprend un correcteur de décalage (43) connecté pour ajuster les angles du rotor à partir de la table de recherche (41) avec des valeurs permettant un décalage du capteur de position (57).

7. Appareil comprenant:

   un moteur à réluctance commutée, comprenant un rotor et comprenant des bobines de stator,
   un circuit de commande selon l'une quelconque des revendications 1 à 6 connectés selon les revendications aux bobines statoriques du moteur,
   un compresseur ayant une roue de compresseur couplée au rotor du moteur à entraîner.

8. Méthode de commande d'un moteur à réluctance commutée,
   comprenant:

   détecter la position du rotor du moteur, en utilisant un capteur unique (57), pour fournir des indications sur une ou plusieurs positions du rotor par tour du rotor,
   dériver des indications des synchronisations de position du rotor les indications des temps d'une ou plusieurs positions du rotor estimées entre les synchronisations indiquées par la détection, et
   exciter les bobines de stator du moteur à des moments déterminés en réponse aux indications du temps des positions estimées.

9. Procédé selon la revendication 8, dans lequel le dériver consiste à estimer une ou plusieurs positions du rotor basé sur l'hypothèse que la vitesse du rotor est actuellement constant.

10. Procédé selon la revendication 8, dans lequel l'estimation est basé sur une vitesse mesurée du rotor.

11. Procédé de circuit de commande selon la revendication 10 où la vitesse mesurée est basée sur les indications de la synchronisation des positions du rotor.

12. Procédé selon la revendication 8, dans lequel la dérivation comprend l'estimation de la ou des positions du rotor en tenant compte de l'accélération du rotor.

13. Procédé selon la revendication 12, dans lequel l'estimation comprend: l'estimation de l'accélération du moteur à partir des mesures de la vitesse du rotor, en estimant la vitesse future du rotor à partir de l'estimation de l'accélération et l'estimation du temps du rotor pour atteindre une position particulière en utilisant cette vitesse future.

14. Procédé selon la revendication 12, dans lequel l'estimation comprend:

(i) faire une estimation initiale des temps de une ou plusieurs positions estimées du rotor; et
(ii) l'ajustement de l'estimation initiale en appliquant une correction facteur permettant ainsi d'obtenir les temps d'une ou de plusieurs positions estimées du rotor.

**15.** Procédé selon l'une quelconque des revendications 8 à 14 dans lequel le moteur à réluctance commutée entraîne une roue de compresseur d'un supercharger.

FIG. 1A

FIG. 1B

FIG. 2

FIG. 3

FIG. 4

FIG. 5

FIG. 6

FIG. 7

*FIG. 8*

FIG. 9

21

*103*

*101*

| load % | 100 | 0.50 | 0.52 | 0.54 | 0.56 | 0.58 | 0.60 | 0.62 | 0.95 |
|---|---|---|---|---|---|---|---|---|---|
| | 80 | 0.60 | 0.62 | 0.64 | 0.66 | 0.68 | 0.70 | 0.72 | 1.00 |
| | 60 | 0.80 | 0.82 | 0.84 | 0.86 | 0.88 | 0.90 | 0.92 | 1.00 |
| | 40 | 0.90 | 0.92 | 0.94 | 0.96 | 0.98 | 1.00 | 1.00 | 1.00 |
| | 20 | 1.00 | 1.00 | 1.00 | 1.00 | 1.00 | 1.00 | 1.00 | 1.00 |
| | 0 | 5000 | 10000 | 2000 | 3000 | xxxxx | xxxxx | xxxxx | xxxxx |

*107*

*105*

RPM

INPUT   OUTPUT

FIG. 10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2264407 A